Europäisches Patentamt

European Patent Office

Office européen des brevets

(19)

(11) Numéro de publication : **0 123 578**
**B1**

(12)

# FASCICULE DE BREVET EUROPÉEN

(45) Date de publication du fascicule du brevet :
16.06.87

(51) Int. Cl.⁴ : **H 02 G 13/00**

(21) Numéro de dépôt : 84400559.5

(22) Date de dépôt : 20.03.84

(54) **Paratonnerre à dispositif piézoélectrique d'amorçage de l'effet Corona.**

(30) Priorité : 25.03.83 FR 8304947

(43) Date de publication de la demande :
31.10.84 Bulletin 84/44

(45) Mention de la délivrance du brevet :
16.06.87 Bulletin 87/25

(84) Etats contractants désignés :
**BE CH DE GB IT LI NL**

(56) Documents cités :
**DE-B- 1 089 440**
**FR-A- 907 037**
**FR-A- 1 478 526**
**FR-A- 2 489 053**
**FR-A- 2 490 286**
**GB-A- 1 258 029**

(73) Titulaire : **COMMISSARIAT A L'ENERGIE ATOMIQUE**
**Etablissement de Caractère Scientifique Technique**
**et Industriel**
**31/33, rue de la Fédération**
**F-75015 Paris (FR)**

(72) Inventeur : **Robert, André**
**4 Bis, Avenue de Noailles**
**F-78320 Le Mesnil Saint Denis (FR)**

(74) Mandataire : **Mongrédien, André et al**
**c/o BREVATOME 25, rue de Ponthieu**
**F-75008 Paris (FR)**

Jouve, 18. rue St-Denis. 75001 Paris, France

## Description

La présente invention a pour objet un paratonnerre à dispositif piézoélectrique d'amorçage de l'effet Corona.

Un paratonnerre se compose de façon connue d'une tige verticale terminée par une pointe métallique et reliée à la terre par un conducteur appelé « descente de paratonnerre ».

Le canal par lequel s'écoule le courant de foudre se construit en deux étapes. Dans une première étape, un précurseur descendant constitué de particules chargées, qui sont très souvent des électrons, se dirige vers le sol. La direction générale de son mouvement est liée au champ électrique local. A l'approche de ce précurseur, les objets au sol subissent un champ électrique intense qui provoque aux points les plus favorables l'apparition de décharges ascendantes appelées traceurs ascendants. Le premier traceur ascendant qui rencontre un précurseur descendant ferme le circuit dans lequel s'écoule le courant de foudre. La foudre tombe donc à l'endroit capable d'émettre le traceur ascendant le plus prompt.

A l'approche du précurseur, la pointe du paratonnerre crée un champ électrique qui est normalement d'un ordre très supérieur à celui de son voisinage. Elle est ainsi le lieu privilégié où prend naissance le traceur ascendant. L'efficacité du paratonnerre, c'est-à-dire l'étendue de la zone protégée, est d'autant plus grande que l'émission du traceur ascendant depuis la pointe est privilégiée par rapport à l'émission d'un traceur ascendant depuis un autre point.

On sait que ce précurseur ascendant est consécutif à l'apparition de l'effet Corona qui consiste en une émission intense d'électrons à partir de la pointe sous l'influence d'un champ électrique intense. Cette émission d'électrons a lieu avec un retard de l'ordre de quelques dizaines de microsecondes après que le champ électrique ait atteint la valeur nécessaire à l'amorçage de l'effet Corona.

Ce retard peut être réduit si on augmente, au voisinage de la pointe, la population des électrons libres. L'effet Corona prend alors naissance à partir d'un électron germe présent dans le voisinage de la pointe, au moment où le champ électrique atteint une valeur minimale inférieure à la valeur d'amorçage précitée.

En diminuant le retard de l'amorçage de l'effet Corona sur la pointe, on engendre un traceur ascendant plus tôt qui rencontrera donc un traceur descendant à une altitude plus grande. Cet effet Corona déclenché plus tôt augmente donc l'étendue de la zone protégée par le paratonnerre.

Le document FR-A-1 478 526 décrit un paratonnerre comprenant une tige métallique terminée par une pointe et reliée au sol par un conducteur électrique et au moins une électrode munie d'une série de pointes dont une extrémité de chacune d'elles est située au voisinage immédiat de la pointe de la tige. Ce paratonnerre comprend en outre une source radioactive, fixée sur l'électrode, pour créer des ions entre l'électrode et la tige.

Dans ce document, le potentiel de l'électrode évolue librement avec le champ magnétique dans lequel il est plongé.

L'objectif de la présente invention est au contraire de produire un effet Corona en portant à un potentiel électrique élevé une électrode convenablement située à proximité de la pointe, qui engendrera des électrons libres dans le voisinage de la pointe, ledit potentiel étant délivré par un cristal piézoélectrique.

L'utilisation d'un cristal piézoélectrique pour porter une électrode à un potentiel électrique est connu en soi par le document GB-A-1 258 029.

Ce document concerne un domaine technique différent de l'invention, et la source radioactive du document FR-A-1 478 526 et le cristal piézoélectrique du document GB-A-1 258 029 constituent des moyens différents ayant une fonction différente.

Le remplacement de la source radioactive par un cristal piézoélectrique n'est donc pas évident.

Enfin, le document FR-A-2 489 053 concerne également un paratonnerre à dispositif d'amorçage muni de sources radioactives et dans lequel un moyen de guidage est prévu pour diriger les particules radioactives vers la pointe de la tige.

De manière plus précise, l'invention a pour objet un paratonnerre à dispositif d'amorçage de l'effet Corona comprenant une tige métallique terminée par une pointe et reliée au sol par un conducteur électrique, et au moins une électrode dont une extrémité est située près de la pointe de la tige, ledit paratonnerre étant caractérisé en ce qu'il comprend au moins un cristal piézoélectrique relié électriquement à au moins une électrode et un moyen pour exercer une pression mécanique sur ledit cristal piézoélectrique.

Selon une autre caractéristique, le paratonnerre comprend en outre un moyen pour transférer les charges électriques créées autour de chaque électrode vers la pointe de la tige.

Ce moyen peut par exemple être un moyen créant un courant d'air ascendant entre chaque électrode et la pointe.

Selon une autre caractéristique, le paratonnerre comprend un carrossage pour protéger les cristaux piézoélectriques des intempéries.

La description ci-après se rapporte à des exemples de réalisation donnés à titre illustratif mais non limitatif et est illustrée par les figures annexées, sur lesquelles :

la figure 1 représente une vue en coupe d'un premier mode de réalisation d'un paratonnerre selon l'invention,

les figures 2a et 2b représentent respectivement une vue en coupe et une vue de dessus d'un deuxième mode de réalisation d'un paratonnerre selon l'invention,

les figures 3a et 3b représentent des vues en coupe de modes de réalisation d'un paratonnerre selon l'invention, dans lesquelles le cristal piézoélectrique est excité par un électroaimant.

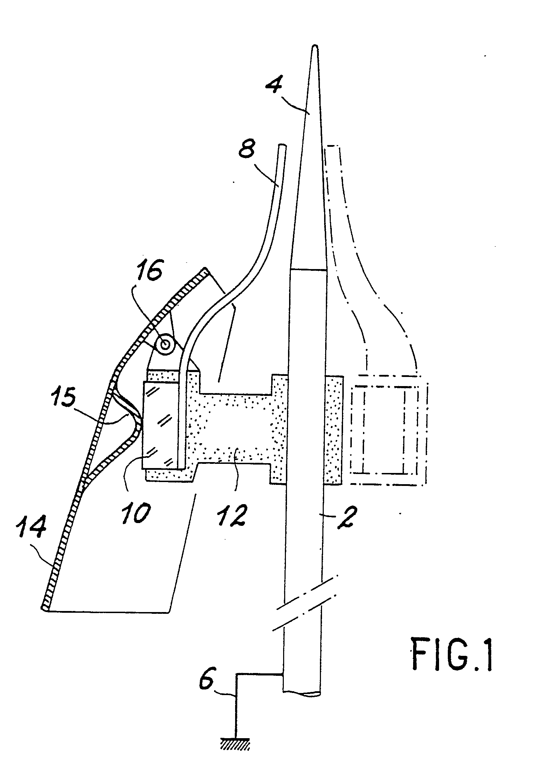

Sur la figure 1, on a représenté schématiquement un paratonnerre selon l'invention, dans lequel les cristaux piézoélectriques sont excités par une force d'origine éolienne. Ce paratonnerre se compose d'une tige 2 reliée par une connexion 6 à la terre et terminée à son extrémité supérieure par une pointe 4. Une ou plusieurs électrodes 8 sont disposées près de la pointe 4. Elles sont fixées sur un support isolant 12 s'appuyant sur la tige 2. Pour les porter à un potentiel suffisant pour amorcer le phénomène Corona, chaque électrode 8 est électriquement reliée à un cristal piézoélectrique 10, lui aussi fixé sur le support isolant 12 sur lequel est exercée une force de pression. Cette force est créée par une pièce 14 munie d'un bossage 15 venant s'appuyer sur le cristal piézoélectrique 10 sous l'action de la force de pression éolienne. Cette pièce 14 est munie d'un axe 16 placé de telle sorte qu'il fasse levier et amplifie la force de pression éolienne.

La forme de la pièce 14 est par ailleurs étudiée pour favoriser les courants d'air ascendant et pour que ces courants d'air ascendant, aussi bien qu'une pression éolienne transversale, puissent exercer sur la pièce 14 une forte pression transmise au cristal piézoélectrique 10. Outre l'action sur la pièce 14, les courants d'air ascendant favorisent le transfert des électrons libres, créés par l'effet Corona autour de l'électrode 8, vers la pointe 4 du paratonnerre. Enfin, la pièce 14 a aussi pour fonction de protéger le ou les cristaux piézoélectriques 10 des intempéries.

Il est avantageux d'isoler la pièce 14 de la masse, par exemple, en fixant l'axe 16 de cette pièce 14 sur le support isolant 12, de telle sorte que l'électrode 8 est portée au potentiel atmosphérique du moment considéré, ce qui augmente son potentiel. Sur la figure 1, on a associé à une électrode 8 un cristal piézoélectrique 10 et une pièce 14. Il est clair que d'autres associations sont possibles. Par exemple, un cristal piézoélectrique 10 peut être relié électriquement à plusieurs électrodes 8. D'autre part, le nombre d'électrodes peut être quelconque. Cependant, compte tenu de la surface de la pièce 14 nécessaire pour créer la force de pression sur le cristal piézoélectrique 10, le nombre d'ensembles formés par les pièces principales 8, 10, 14 est en pratique réduit à quelques unités.

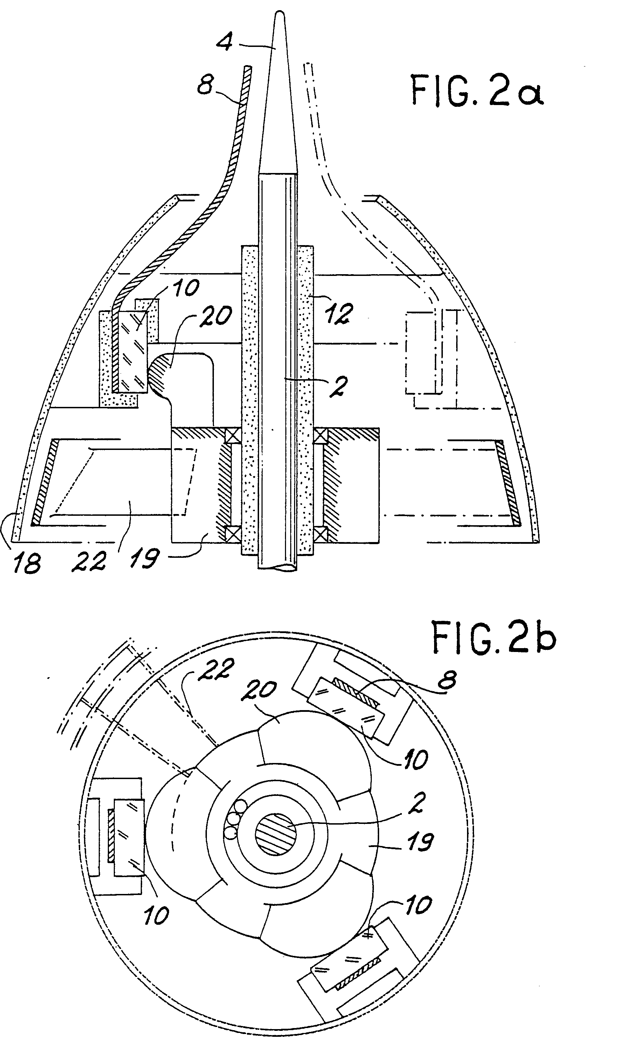

La figure 1 représente un mode de réalisation d'un paratonnerre selon l'invention dans lequel l'énergie éolienne est transmise par l'intermédiaire d'une pièce formant levier au cristal piézoélectrique. D'autres moyens de transmission de cette force sont possibles. A titre d'exemple, les figures 2a et 2b illustrent un paratonnerre selon l'invention, dans lequel l'énergie éolienne est récupérée par l'intermédiaire d'une turbine pour être transformée en une force de pression appliquée aux cristaux piézoélectriques.

Le paratonnerre représenté en coupe sur la figure 2a comprend une tige 2 terminée par une pointe 4 près de laquelle sont disposées une ou plusieurs électrodes 8. Comme sur la figure précédente, ces électrodes 8 sont électriquement reliées à un ou plusieurs cristaux piézoélectriques 10. Ces électrodes 8 et ces cristaux piézoélectriques 10 sont fixés sur le paratonnerre par l'intermédiaire d'un support isolant 12 s'appuyant sur la tige 2. Ce paratonnerre comprend en outre une turbine 22 montée sur une couronne 19. Celle-ci est surmontée d'un ou plusieurs bossages 20 qui, par rotation, viennent exercer une pression sur les cristaux piézoélectriques 10 qui transmettent ainsi un potentiel électrique élevé aux électrodes 8. L'ensemble des éléments de ce paratonnerre, et plus particulièrement les cristaux piézoélectriques 10, sont protégés par un carrossage 18.

Sur la figure 2b, on voit de manière plus précise la forme de la couronne 19 et des bossages 20. Sur cette figure, on a représenté trois cristaux piézoélectriques 10 et une couronne 19 surmontée de trois bossages 20. Ceci n'est bien entendu qu'un exemple. On peut imaginer de disposer sur la couronne 19 plusieurs bossages 20, de telle sorte que les différents cristaux piézoélectriques 10 soient excités séquentiellement et non pas simultanément comme illustré sur la figure. On peut aussi envisager d'utiliser une couronne 19 surmontée d'un seul bossage 20. La vitesse de rotation des bossages 20, donc la fréquence d'excitation des cristaux piézoélectriques 10, dépend de la vitesse de la turbine 22 entraînée par le vent. En fait, il est possible de modifier la vitesse de rotation des bossages 20 en insérant une démultiplication entre la turbine 22 et ces bossages 20.

La turbine 22 sera, de manière préférée, construite pour créer lors de sa rotation un courant d'air ascendant favorisant le transfert des électrons libres, créés par effet Corona autour des électrodes 8, vers la tige 4.

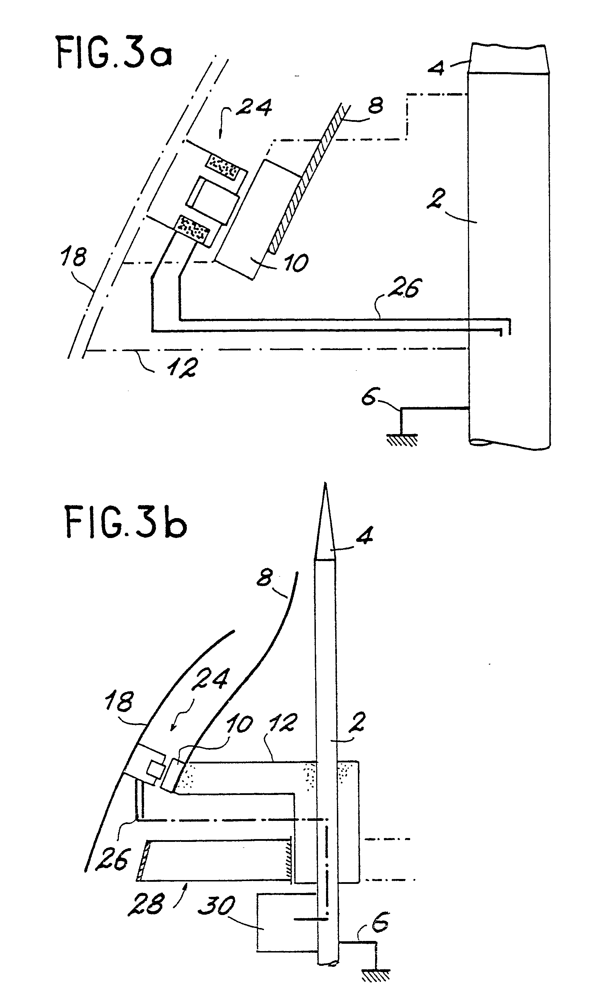

L'exemple de réalisation d'un paratonnerre selon l'invention donné sur la figure 3a diffère de ceux donnés sur les figures précédentes par le fait que la pression exercée sur les cristaux piézoélectriques 10 a pour origine une énergie électrique et non plus éolienne. Sur la figure 3b, on a représenté un mode de réalisation dans lequel l'action du vent crée un courant électrique qui est à l'origine de la force de pression.

Sur la figure 3a, on a représenté une tige 2 de paratonnerre reliée à la terre par une connexion 6 et terminée par une pointe 4. Ce paratonnerre comprend en outre une ou plusieurs électrodes 8 reliées à un ou plusieurs cristaux piézoélectriques 10 fixés sur un support isolant 12 s'appuyant sur la tige 2. Ce paratonnerre comprend en outre un carrossage 18 pour protéger les cristaux piézoélectriques 10 des intempéries. Il comprend enfin au moins un électroaimant 24 fixé sur la face interne du carrossage 18 et placé en regard de chaque cristal piézoélectrique 10. Cet électroaimant 24 est muni de fils d'alimentation 26 reliés à une source de courant.

Le dispositif fonctionne de la façon suivante : lorsque les fils électriques 26 sont alimentés par un courant électrique, l'électroaimant 24 exerce une pression sur le cristal piézoélectrique 10, ce qui porte l'électrode 8 correspondante au potentiel suffisant pour créer des électrons libres par effet Corona.

Dans le cas où une alimentation électrique actionne le cristal piézoélectrique, le circuit électrique comprend des moyens pour le protéger des surtensions possibles dues à la foudre. Dans ce cas, il peut en outre être intéressant de commander l'application du courant d'alimentation par un dispositif capteur de champ électrique. De cette façon les cristaux piézoélectriques ne sont actionnés que lorsque survient une forte probabilité de coup de foudre. Ce capteur peut être simplement un dispositif constatant que la différence de potentiel entre la masse du paratonnerre et l'électrode isolée 18 est supérieure à une valeur prédéterminée.

La figure 3b représente une coupe d'un paratonnerre selon l'invention qui ne diffère de celui de la figure précédente que par le moyen d'alimentation de l'électroaimant 24. En effet, dans ce mode de réalisation, les fils électriques 26 sont reliés à une dynamo 30 commandée par une turbine 28 actionnée par le vent.

Sur cette figure et sur la figure précédente, le carrossage 18 a, de manière préférée, une forme favorisant l'apparition d'un courant ascendant entre les électrodes 8 et la pointe 4 du paratonnerre.

Dans les trois figures représentées, la force de pression sur les cristaux piézoélectriques est réalisée par une énergie électrique ou une énergie éolienne. Il est bien clair que d'autres types d'énergies peuvent être employés pour engendrer une force de pression sur les cristaux piézoélectriques, par exemple une énergie magnétique, une énergie thermique ou autre.

**Revendications**

1. Paratonnerre à dispositif d'amorçage de l'effet Corona comprenant une tige (2) métallique terminée par une pointe (4) et reliée au sol par un conducteur électrique (6) et au moins une électrode (8) dont une extrémité est située près de la pointe (4) de la tige (2), ledit paratonnerre étant caractérisé en ce qu'il comprend au moins un cristal piézoélectrique (10), relié électriquement à au moins une électrode (8), et un moyen (15, 20, 24) pour exercer une pression mécanique sur ledit cristal piézoélectrique (10).

2. Paratonnerre selon la revendication 1, caractérisé en ce qu'il comprend en outre un moyen (14) pour transférer les particules chargées créées autour de chaque électrode (8) vers la pointe (4) de la tige (2).

3. Paratonnerre selon l'une quelconque des revendications 1 et 2, caractérisé en ce qu'il comprend en outre un carrossage (14, 18) pour protéger les cristaux piézoélectriques (10) des intempéries.

**Claims**

1. Lightning arrester incorporating a device for initiating the corona effect, comprising a metallic rod (2) terminated by a tip (4) and connected to earth by an electrical conductor (6) and at least one electrode (8), one end of which is situated close to the tip (4) of the rod (2), the said lightning arrester being characterized in that it includes at least one piezoelectric crystal (10) electrically connected to at least one electrode (8), and a means (15, 20, 24) for exerting a mechanical pressure on the said piezoelectric crystal (10).

2. Lightning arrester according to Claim 1, characterized in that it further includes a means (14) for transferring the charged particles created around each electrode (8) towards the tip (4) of the rod (2).

3. Lightning arrester according to either one of Claims 1 and 2, characterized in that it further includes a facing (14, 18) to protect the piezoelectric crystals (10) from atmospheric influences.

**Patentansprüche**

1. Blitzableiter mit piezoelektrischer Entzündungsvorrichtung des Koronareffektes mit einer Metallstange (2), die in einer Spitze (4) endet und über einen elektrischen Leiter (6) mit der Erde verbunden ist und mit mindestens einer Elektrode (8), deren eines Ende in der Nähe der Spitze (4) der Stange (2) angeordnet ist, gekennzeichnet durch mindestens einen Piezokristall (10), der elektrisch mit mindestens einer Elektrode (8) verbunden ist und einem Organ (15, 20, 24) zum Ausüben eines mechanischen Druckes auf den Piezokristall (10).

2. Blitzableiter nach Anspruch 1, gekennzeichnet durch ein Organ (14) zum Transportieren geladener Partikel, die um jede Elektrode (8) erzeugt werden zur Spitze (4) der Stange (2) hin.

3. Blitzableiter nach einem der Ansprüche 1 und 2, gekennzeichnet durch ein Gehäuse (14, 18) zum Schutz des piezoelektrischen Kristalls (10) vor Wettereinflüssen.

FIG.1

0 123 578

4

8

FIG.2a

10

20

12

2

18   22   19

FIG.2b

22   20   8

10

2

19

10   10

2

FIG.3a

FIG.3b